# EUROPEAN PATENT APPLICATION

(11) **EP 4 797 713 A1**
(43) Date of publication of application: **26.08.2026**
(21) Application number: 24943255.0
(22) Date of filing: 24.12.2024
(51) Int. Cl.: H04N 23/54

(54) **CAMERA MODULE AND ELECTRONIC DEVICE**

(30) Priority: 13.06.2024 CN 202410765640
(71) Applicant: HUAWEI TECHNOLOGIES CO., LTD., Shenzhen 518129 (CN)
(72) Inventor: QUAN, Teng, Shenzhen, Guangdong 518129 (CN); WEI, Jinqiang, Shenzhen, Guangdong 518129 (CN)
(74) Representative: Maiwald GmbH
(86) International application number: PCT/CN2024/141955
(87) International publication number: WO 2025/256103

(57) **Abstract**

Embodiments of this application relate to the field of image shooting technologies, and provide a camera module and an electronic device, to reduce a size of a camera. A circuit board of the camera module may include a first portion and a second portion. The first portion is disposed on a side on which a first surface of an image sensor is located, and covers a non-photosensitive area. The first portion is electrically connected to the image sensor. In addition, the second portion is disposed around a periphery of the first portion. A vertical projection of the second portion onto a plane on which the first surface is located does not overlap the image sensor. In a direction perpendicular to the first surface, the first portion may overlap the image sensor to reduce a length of the camera module. The first portion is located between a lens assembly and the image sensor, allowing a thickness of the first portion of the circuit board to be shared with a total track length.

## Description

This application claims priority to Chinese Patent Application No. 202410765640.5, filed with the China National Intellectual Property Administration on June 13, 2024 and entitled "CAMERA MODULE AND ELECTRONIC DEVICE", which is incorporated herein by reference in its entirety.

### TECHNICAL FIELD

This application relates to the field of image shooting technologies, and in particular, to a camera module and an electronic device.

### BACKGROUND

Photographing and image shooting have become commonly used functions of electronic devices, allowing for increasingly widespread application of cameras in the electronic devices. With continuous advancement of technologies, the electronic devices gradually evolve toward light and thin forms with high screen-to-body ratios. However, currently, a size of a camera is large. As a result, the camera occupies large layout space of an electronic device, hindering the electronic device from satisfying design requirements for lightness and thinness or a high screen-to-body ratio.

### SUMMARY

This application provides a camera module and an electronic device, to reduce a size of a camera.

To achieve the foregoing objective, this application uses the following technical solutions.

An aspect of this application provides a camera module. The camera module includes an image sensor, a circuit board, and a lens assembly. The image sensor has a first surface, and the first surface has a photosensitive area and a non-photosensitive area that is around a periphery of the photosensitive area. The circuit board may include a first portion and a second portion. The first portion is disposed on a side on which the first surface is located, and covers the non-photosensitive area. The first portion may cover the whole non-photosensitive area or may cover a portion of the non-photosensitive area. The first portion is provided with a first light-transmitting hole, and the first light-transmitting hole exposes the photosensitive area. The first portion is electrically connected to the image sensor. In addition, the second portion is located on a side that is of the first portion and that faces away from the first light-transmitting hole; and the second portion is disposed around a periphery of the first portion, and the second portion is electrically connected to the first portion. A vertical projection of the second portion onto a plane on which the first surface is located does not overlap the image sensor. The lens assembly is disposed on a side that is of the circuit board and that faces away from the image sensor.

In conclusion, in the camera module provided in this embodiment of this application, the lens assembly is disposed on the side that is of the circuit board and that faces away from the image sensor, and the first portion of the circuit board is provided with the first light-transmitting hole that exposes the photosensitive area. Therefore, after passing through the lens assembly, incident light may pass through the first light-transmitting hole and enter the photosensitive area of the image sensor. In addition, the first portion of the circuit board is electrically connected to the image sensor. Therefore, the image sensor may be electrically connected to the entire circuit board through the first portion, so that the image sensor can perform photoelectric conversion on the incident light. On this basis, the first portion of the circuit board is located on the side on which the first surface of the image sensor is located, and the first portion covers the non-photosensitive area of the image sensor. Therefore, the first portion may overlap the image sensor in a direction perpendicular to the first surface. In this case, in a direction parallel to the first surface, a partial length of the circuit board (for example, a length of an overlapping portion) is shared with a partial length of the image sensor (for example, the length of the overlapping portion), reducing a length of the camera module. Based on this, when the length of the camera module is reduced, a size that is of a bezel area and that is occupied by the camera module may be reduced, reducing a size of the bezel area. This helps implement a narrow bezel design of an electronic device, and increase a screen-to-body ratio of the electronic device. In addition, in the camera module provided in this embodiment of this application, at least a portion of the circuit board, namely, the first portion of the circuit board, is stacked on a side that is of the image sensor and that faces the lens assembly. Therefore, the first portion is located between the lens assembly and the image sensor, allowing a thickness of the first portion of the circuit board to be shared with a total track length. This can reduce a thickness of the camera module, helping satisfy ultra-thin design requirements of the entire electronic device.

In an optional implementation, the camera module further includes a first support member. The first support member is disposed between the circuit board and the lens assembly, and the first support member is configured to connect to the circuit board and the lens assembly. The first support member is provided with a second light-transmitting hole, and the second light-transmitting hole communicates with the first light-transmitting hole. In this way, the first support member is disposed between the circuit board and the lens assembly, so that a mechanical part formed by connecting the first support member and the circuit board can support the lens assembly. This improves support performance for the lens assembly, and avoids affecting formation of the circuit board caused by direct pressure exerted by the lens assembly on the circuit board.

In an optional implementation, a surface that is of the first support member and that faces away from the image sensor is provided with a first groove, and the second light-transmitting hole is provided at a bottom of the first groove. The camera module further includes a filter, the filter is disposed in the first groove, the filter is connected to the bottom of the first groove, and the filter covers the photosensitive area. In this way, the first support member may support the filter. In addition, the filter is located in the first groove of the first support member, a thickness of the first support member may overlap a thickness of the filter, so that the thickness of the entire camera module can be reduced.

In an optional implementation, the first support member is an injection molded part, and the first support member covers the first portion and the second portion. In this way, the first support member may cover the first portion and the second portion, so that strength of an integrated mechanical part formed by connecting the first support member and the circuit board can be improved, allowing the integrated mechanical part to support the lens assembly more effectively. On this basis, the integrated mechanical part formed by connecting the first support member and the circuit board has high strength to support the lens assembly, so that the integrated mechanical part formed by connecting the first support member and the circuit board can replace a ceramic substrate, reducing production costs of products. In addition, the first support member covers the first portion of the circuit board, so that the first support member can support the first portion, improving flatness of a surface that is of the first portion and that faces the image sensor, namely, a lower surface of the first portion. In this way, when the image sensor is welded to the first portion of the circuit board 22 by using a flip-chip process, a probability that a cold solder joint occurs between the image sensor and the circuit board can be reduced, improving reliability of products.

In an optional implementation, a thickness D1 of the first support member that covers the first portion satisfies: D1≥0.1 mm. The thickness may enable the first support member to effectively support the first portion, so that the lower surface of the first portion has good flatness. For example, D1 may be 0.1 mm, 0.15 mm, 0.2 mm, 0.25 mm, 0.3 mm, or the like.

In an optional implementation, the camera module further includes a second support member. The second support member may be disposed on a side that is of the second portion and that faces away from the lens assembly, and the second support member is connected to the second portion. In this way, the second support member connected to the circuit board is disposed, so that a mechanical part formed by connecting the second support member, the circuit board, and the first support member has strong rigidity, improving rigidity of the entire camera module.

In an optional implementation, a surface that is of the second support member and that faces away from the circuit board protrudes from a surface that is of the image sensor and that faces away from the circuit board. The second support member may be disposed around a periphery of the image sensor. Therefore, a portion that is of the second support member and that protrudes from the image sensor may protect the image sensor. During installation, reliability testing, and use, a probability of collision and friction between a lower surface of the image sensor and another component can be reduced, improving a service life of the image sensor and reliability of the entire camera module.

In an optional implementation, a lower surface of the second support member may be flush with the lower surface of the image sensor.

In an optional implementation, the second support member is a metal sheet. For example, the metal sheet may be a steel sheet.

In an optional implementation, in a direction perpendicular to the first surface, the circuit board includes a dielectric layer and a metal pattern layer that are alternately disposed. The metal pattern layer in the second portion includes a ground part. The metal sheet is electrically connected to the ground part, so that the second support member can be grounded. In this way, the second support member can have anti-electromagnetic interference effect, reducing interference caused by an electronic component outside the camera module to the image sensor, and improving detection precision of the image sensor.

In an optional implementation, the ground part is exposed on a surface that is of the second portion and that faces away from the lens assembly. The camera module further includes a conductive layer, the conductive layer is located between the ground part and the metal sheet, and the conductive layer is electrically connected to the ground part and the metal sheet. For example, the conductive layer may be an anisotropic conductive film. In this way, the conductive layer is disposed, so that the ground part may be electrically connected to the metal sheet, and the conductive layer can improve conductive performance between the ground part and the metal sheet.

In an optional implementation, a first gap exists between the image sensor and the first portion. The electrical connector may be disposed in the first gap. In addition, a second gap may exist between the image sensor and the second support member. A size of the second gap may satisfy design requirements of a mounting tolerance, facilitating formation of an opening in the second support member and installation of the image sensor in the opening. Based on this, to fasten the image sensor, the camera module may further include a first bonding layer. The first bonding layer may fill the second gap and a portion of the first gap, and the first bonding layer may be connected to the first portion of the circuit board, the image sensor, and the second support member. In this way, the image sensor may be connected to the circuit board and the second support member through the first bonding layer, reducing a probability that the image sensor falls off.

In an optional implementation, the second portion is disposed around a periphery of the image sensor, and the second portion and the first portion enclose a second groove configured to accommodate the image sensor. In a direction perpendicular to the first surface, the circuit board includes a dielectric layer and a metal pattern layer that are alternately disposed. A quantity of dielectric layers in the second portion is greater than a quantity of dielectric layers in the first portion; and a quantity of metal pattern layers in the second portion is greater than a quantity of metal pattern layers in the first portion. One dielectric layer in the first portion and one dielectric layer in the second portion are disposed at a same layer. One metal pattern layer in the first portion and one metal pattern layer in the second portion are disposed at a same layer. In this way, the first portion and the second portion of the circuit board may belong to a same circuit substrate. A portion of the dielectric layer and the metal pattern layer in the circuit substrate are cut off by using a cutting process, to form the first portion with a small quantity of film layers, and a portion that is not cut may form the second portion with a large quantity of film layers. In this case, two independent circuit boards do not need to be spliced to form the circuit board having the first portion and the second portion, simplifying a manufacturing process of the circuit board.

In an optional implementation, a surface that is of the second portion and that faces away from the lens assembly protrudes from a surface that is of the image sensor and that faces away from the circuit board. A protruding portion of the second portion may protect the image sensor, to reduce a probability of collision or friction occurring on the image sensor.

In an optional implementation, the metal pattern layer in the second portion includes a ground part. The ground part is exposed on the surface that is of the second portion and that faces away from the lens assembly, so that interference caused by an electronic component outside the camera module to the image sensor can be reduced.

In an optional implementation, a first gap for accommodating the electrical connector exists between the image sensor and the first portion of the circuit board. In addition, a third gap for satisfying a mounting tolerance of the image sensor exists between the image sensor and the second portion of the circuit board. The camera module further includes a second bonding layer, the second bonding layer fills the third gap and a portion of the first gap, and the second bonding layer is connected to the first portion, the image sensor, and the second portion. Technical effects of the second bonding layer and the first bonding layer are the same as those described above. Details are not described herein again.

In an optional implementation, the camera module further includes a first pad, a second pad, and an electrical connector. The first pad is disposed on the first surface and is located in the non-photosensitive area. In addition, the first pad is electrically connected to the image sensor. The second pad is disposed on a surface that is of the first portion and that faces the image sensor, and the second pad is electrically connected to the circuit board. The electrical connector is located between the first pad and the second pad, one end of the electrical connector is electrically connected to the first pad, and the other end is electrically connected to the second pad. In this way, the image sensor is electrically connected to the circuit board through the first pad, the second pad, and the electrical connector.

In an optional implementation, the electrical connector includes a solder ball or a gold ball. In this way, the image sensor may be welded to the circuit board through the first pad, the second pad, and the electrical connector by using a flip-chip process, so that the image sensor may be electrically connected to the circuit board through the electrical connector.

Another aspect of embodiments of this application provides an electronic device, including a housing and any one of the foregoing camera modules, and the camera module is connected to the housing. The electronic device has same technical effects as the camera module provided in the foregoing embodiments. Details are not described herein again.

### BRIEF DESCRIPTION OF DRAWINGS

FIG. 1 is a diagram of a structure of an electronic device according to an embodiment of this application;
FIG. 2 is a cross-sectional view obtained by cutting along a dashed line O1-O2 in FIG. 1;
FIG. 3 is a diagram of a structure of a camera module in FIG. 2;
FIG. 4 is an exploded view of a structure of the camera module in FIG. 3;
FIG. 5 is an exploded view of another structure of the camera module in FIG. 3;
FIG. 6 is a cross-sectional view obtained by cutting along a dashed line O3-O4 in FIG. 3;
FIG. 7 is another cross-sectional view obtained by cutting along a dashed line O3-O4 in FIG. 3;
FIG. 8 is still another cross-sectional view obtained by cutting along a dashed line O3-O4 in FIG. 3;
FIG. 9 is an exploded view of still another structure of the camera module in FIG. 3;
FIG. 10 is yet another cross-sectional view obtained by cutting along a dashed line O3-O4 in FIG. 3;
FIG. 11 is yet another cross-sectional view obtained by cutting along a dashed line O3-O4 in FIG. 3;
FIG. 12 is an exploded view of yet another structure of the camera module in FIG. 3;
FIG. 13 is yet another cross-sectional view obtained by cutting along a dashed line O3-O4 in FIG. 3;
FIG. 14 is a diagram of a structure of a camera module according to an embodiment of this application;
FIG. 15 is yet another cross-sectional view obtained by cutting along a dashed line O3-O4 in FIG. 3;
FIG. 16 is a diagram of a structure of a circuit board connection board according to an embodiment of this application;
FIG. 17 is a cross-sectional view obtained by cutting along a dashed line O5-O6 in FIG. 16;
FIG. 18 is a diagram of another structure of a circuit board connection board according to an embodiment of this application;
FIG. 19 is a diagram of still another structure of a circuit board connection board according to an embodiment of this application;
FIG. 20 is a cross-sectional view obtained by cutting along a dashed line O7-O8 in FIG. 19;
FIG. 21 is a diagram of yet another structure of a circuit board connection board according to an embodiment of this application;
FIG. 22 is a diagram of a structure of a circuit board obtained by cutting the circuit board connection board in FIG. 21;
FIG. 23 is a diagram of a structure of an image sensor according to an embodiment of this application;
FIG. 24 is a diagram of a manufacturing process of a camera module according to an embodiment of this application;
FIG. 25 is a diagram of another manufacturing process of a camera module according to an embodiment of this application;
FIG. 26 is yet another cross-sectional view obtained by cutting along a dashed line O3-O4 in FIG. 3; and
FIG. 27 is a diagram of a structure of another camera module according to an embodiment of this application.

### Reference numerals:

01: electronic device; 02: display; 201: active display area; 202: bezel area; 03: housing; 10: camera module; 04: middle frame; 05: rear housing; 200: through hole; 06: transparent cover plate; 11: lens assembly; 12: motor; 13: variable aperture; 100: aperture hole; 20: filter; 21: image sensor; 22: circuit board; S1: first surface; 221: first portion; 222: second portion; 110: first light-transmitting hole; 101: photosensitive area; 102: non-photosensitive area; 231: first pad; 232: second pad; 233: electrical connector; 15: jumper; 24: first support member; 120: second light-transmitting hole; 130: first groove; 223: circuit board body; 224: bent part; 225: connection part; 25: second support member; 2501: opening; 2201: dielectric layer; 2202: metal pattern layer; 2200: ground part; 26: conductive layer; 301: first gap; 302: second gap; 27: first bonding layer; 40: circuit board connection board; 401: connection rib; 42: electronic component; 131: second groove; 303: third gap; 28: second bonding layer.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms such as "first" and "second" mentioned below are merely intended for ease of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In addition, in embodiments of this application, orientation terms such as "upper", "lower", "transverse", "longitudinal", "horizontal", and "vertical" may include but are not limited to definitions based on illustrated orientations in which components in the accompanying drawings are placed. It should be understood that, these directional terms may be relative concepts used for relative description and clarification, and may change accordingly depending on a change in the orientations in which the components are placed in the accompanying drawings.

In this application, unless otherwise expressly specified and limited, the term "connection" should be understood in a broad sense. For example, "connection" may be a fixed mechanical connection, or may be a detachable mechanical connection or an integration. Alternatively, "connection" may be a direct connection, or may be an indirect connection via an intermediate medium.

In addition, unless otherwise expressly specified and limited, the term "electrical connection" should be understood in a broad sense. For example, "electrical connection" may be a direct electrical connection, for example, two components are physically in contact and electrically connected; or may be understood as that in a line structure, different components are electrically connected through a physical line that can transmit an electrical signal, such as a printed circuit board (printed circuit board, PCB) copper foil or a conducting wire, to transmit an electrical signal. Alternatively, "electrical connection" may be an indirect electrical connection between two components via an intermediate medium. Alternatively, "electrical connection" may be an electrical connection between two components in a separated/non-contact manner. For example, two components are electrically connected in a capacitive coupling manner, to transmit an electrical signal.

In embodiments of this application, "perpendicular" and "parallel" are described to respectively represent being roughly perpendicular and being roughly parallel within an allowed error range. The error range may be a range in which a deviation angle is less than or equal to 5°, 8°, or 10° relative to being absolutely perpendicular and being absolutely parallel. This is not specifically limited herein.

In the accompanying drawings of embodiments of this application, an assembly is represented by using a guide line with an arrow, a component is represented by using only a guide line, and a hollow structure like an opening or a hole is represented by using a guide line with a wavy line at an end.

An embodiment of this application provides an electronic device. The electronic device may have a display function. The electronic device may be applied to various communication systems or communication protocols, for example, a Bluetooth (Bluetooth, BT) communication technology, a global positioning system (global positioning system, GPS) communication technology, a global system for mobile communications (global system of mobile communication, GSM) communication technology, a wireless fidelity (wireless fidelity, Wi-Fi) communication technology, a wideband code division multiple access (wideband code division multiple access wireless, WCDMA) communication technology, long term evolution (long term evolution, LTE), a 5G communication technology, and another future communication technology.

The electronic device in embodiments of this application may be a mobile phone (mobile phone), a tablet computer (pad), a notebook computer, a smart home, a smart wearable device (for example, a smartwatch, a smart band, smart glasses, or a smart helmet), a virtual reality (virtual reality, VR) electronic device, an augmented reality (augmented reality, AR) electronic device, or the like. Alternatively, the electronic device may be a handheld device that has a wireless communication function, a compute device or another processing device connected to a wireless modem, a vehicle-mounted device, an electronic device in a 5G network, an electronic device in a future evolved public land mobile network (public land mobile network, PLMN), or the like. This is not limited in embodiments of this application. For ease of description, an example in which the electronic device is a tablet computer is used below for description.

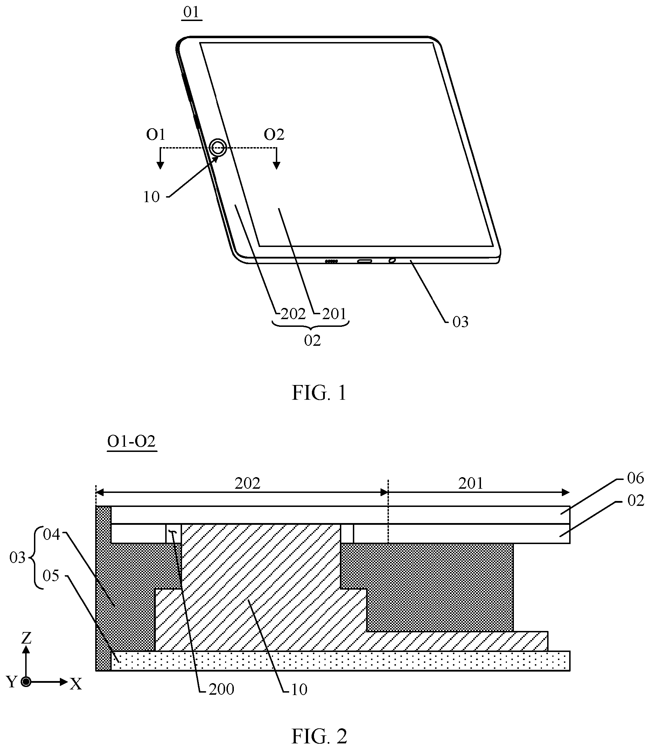

In some embodiments, to enable the electronic device to implement a display function, as shown in FIG. 1, an electronic device 01 provided in this embodiment of this application may include a display 02 and a housing 03 located on a back of the display 02 (disposed opposite to a display surface of the display 02). The display 02 may be a liquid crystal display (liquid crystal display, LCD), an organic light-emitting diode (organic light-emitting diode, OLED) display, a micro (micro or mini) light-emitting diode (light-emitting diode) display, a quantum dot light-emitting diode (quantum dot light-emitting diode, QLED) display, or the like. A type of the display is not limited in this application.

The electronic device 01 may further include a processor electrically connected to the display 02 and a mainboard configured to carry the processor. The processor and the mainboard may be disposed in installation space formed between the housing 03 and the display 02. The processor may provide display data for the display 02, to drive the display 02 to display an image. For example, the processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In addition, the electronic device 01 may further include a gyro (gyro) sensor, a Hall sensor (Hall sensor), an interface for external memory, an internal memory, a universal serial bus (universal serial bus, USB) port, a charging management module, a power management module, a battery, an antenna, a mobile communication module, a wireless communication module, an audio module, a speaker, a receiver, a microphone, a headset jack, a sensor module, a button, a camera, and the like that are electrically connected to the processor. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

In some embodiments, to enable the electronic device 01 to implement image capture, namely, an image shooting function, the electronic device 01 provided in this embodiment of this application may further include a camera module 10 shown in FIG. 1. The camera module 10 may be connected to the housing 03. For example, the display 02 may have an active display area 201 and a bezel area 202 disposed around the active display area 201. In this case, when the camera module 10 is a front-facing camera module, the camera module 10 may be disposed in the bezel area 202, to avoid impact of the camera module 10 on an image displayed in the active display area 201.

In addition, as shown in FIG. 2 (a cross-sectional view obtained by cutting along a dashed line O1-O2 in FIG. 1), in some embodiments of this application, the housing 03 may include a middle frame 04 and a rear housing 05. The rear housing 05 may be disposed on a side that is of the middle frame 04 and that faces away from the display 02, and the middle frame 04 may be disposed around a periphery of the rear housing 05. A portion of the middle frame 04 may serve as a side wall of the electronic device 01. The middle frame 04 is configured to support the display 02. In this case, the camera module 10 may be disposed on a surface on a side that is of the rear housing 05 and that faces the display 02, and the camera module 10 is connected to at least one of the rear housing 05 or the middle frame 04, or the camera module 10 may be connected to another housing. In addition, in some embodiments of this application, the camera module 10 may further pass through the middle frame 04 and the display 02, so that a light inlet side of the camera module 10, namely, an upper surface of the camera module 10, may be exposed on a side on which the display surface (a surface configured to display an image) of the display 02 is located. To protect the display surface of the display 02, the electronic device 01 may further include a transparent cover plate 06 that covers the display surface of the display 02. Alternatively, in some other embodiments, the transparent cover plate 06 may not be disposed in the electronic device 01.

FIG. 2 uses an example in which the display 02 is provided with a through hole 200, so that the camera module 10 used as the front-facing camera module can completely pass through the display 02 for description. In some other embodiments of this application, the camera module 10 may pass through a portion of the display 02. Alternatively, in still some other embodiments, the display 02 may cover the light inlet side of the camera module 10, and a portion that is of the display 02 and that covers the camera module 10 may be disposed as a transparent structure, so that external light can pass through the transparent structure and enter the camera module 10. In this case, the camera module 10 does not need to pass through the display 02, and the camera module 10 may be located on a side on which a lower surface that is of the display 02 and that faces the rear housing 05 is located. In addition, the camera module 10 may be in contact with the lower surface of the display 02, or a gap may exist between the camera module 10 and the lower surface of the display 02. This is not limited in this application.

The foregoing descriptions are provided by using an example in which the camera module 10 is the front-facing camera module. In some other embodiments of this application, the camera module 10 may be a rear-facing camera module. In this case, the camera module 10 may be disposed on a surface that is of the middle frame 04 and that faces the rear housing 05, and the camera module 10 may be connected to the middle frame 04. The rear housing 05 may be provided with a through hole for exposing the camera module 10.

In addition, for the camera module 10 being any one of the front-facing camera module and the rear-facing camera module, the camera module 10 may be one or more of a standard camera module, a long-focus camera module, a wide-angle camera module, an ultra-long-focus camera module, and an ultra-wide-angle camera module. In addition, a quantity of camera modules 10 is not limited in this application.

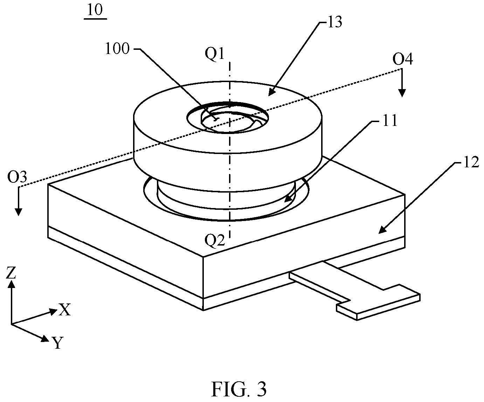

The following describes a structure of the camera module 10 by using an example. In some embodiments of this application, as shown in FIG. 3, the camera module 10 may include a lens assembly 11, a motor 12, and a variable aperture 13. For ease of description, X, Y, Z coordinate axes are established in the figure, where a Z direction may be a direction of an optical axis Q1-Q2 of the variable aperture 13. An XY plane formed in an X direction and a Y direction may be perpendicular to the direction of the optical axis Q1-Q2 of the variable aperture 13.

Based on this, still as shown in FIG. 3, the lens assembly 11 may include one or more optical lenses, so that the lens assembly 11 having the optical lens may use a refraction principle of the optical lens to gather light from a photographed object onto a focal plane of the camera module 10 for imaging. The variable aperture 13 is disposed on a light inlet side of the lens assembly 11. The variable aperture 13 has an aperture hole 100 with an adjustable hole diameter. An amount of external light entering the camera module 10 may be adjusted by changing the hole diameter of the aperture hole 100. In addition, the motor 12 can drive the lens assembly 11 to move in the Z direction, to implement auto focus (auto focus, AF). Alternatively, for another example, the motor 12 can further drive the lens assembly 11 to move in the XY plane or rotate around the optical axis Q1-Q2 of the lens assembly 11, to implement optical image stabilization.

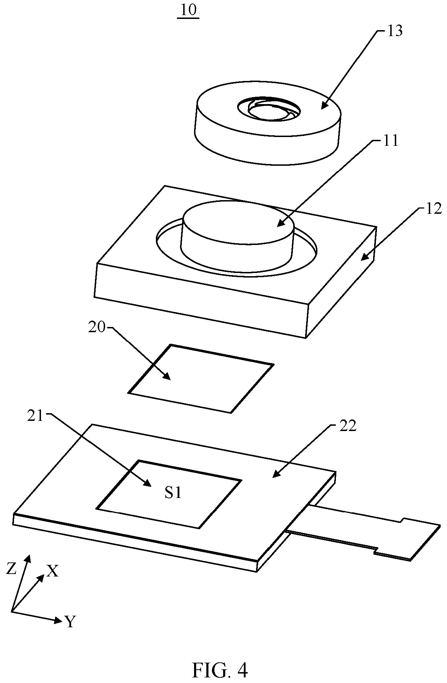

On this basis, to enable the camera module 10 to perform photoelectric conversion on light entering the camera module 10 to generate image information, as shown in FIG. 4, the camera module 10 may further include a filter 20, an image sensor 21, and a circuit board 22. The image sensor 21 is electrically connected to the circuit board 22, so that the image sensor 21 may be electrically connected to the mainboard through the circuit board 22. For example, the circuit board 22 may be a PCB, or a flexible printed circuit board (flexible printed circuit board, FPCB). Alternatively, the circuit board 22 may be a rigid-flex printed circuit board (rigid-flex printed circuit board, RFPCB). A type of the circuit board 22 is not limited in this application.

Still as shown in FIG. 4, the filter 20 is disposed on a light inlet side of the image sensor 21. For example, the filter 20 may be an infrared (infrared, IR) filter, and the infrared filter may filter out infrared light in ambient light and transmit visible light. Alternatively, for another example, the filter 20 may be a dual-band-pass filter that is capable of selectively transmitting bands within two ranges of ambient light, for example, visible light and infrared light, visible light and ultraviolet light, or ultraviolet light and infrared light. A type of the filter 20 is not limited in this application.

In addition, still as shown in FIG. 4, the image sensor 21 is disposed at a position of the focal plane of the camera module 10, so that the image sensor 21 can receive a light image of the photographed object converged by the lens assembly 11, and convert a received optical signal into an electrical signal. For example, the image sensor 21 may be a complementary metal oxide semiconductor (complementary metal oxide semiconductor, CMOS) image sensor or a charge coupled device (charge coupled device, CCD) image sensor. A type of the image sensor 21 is not limited in this application.

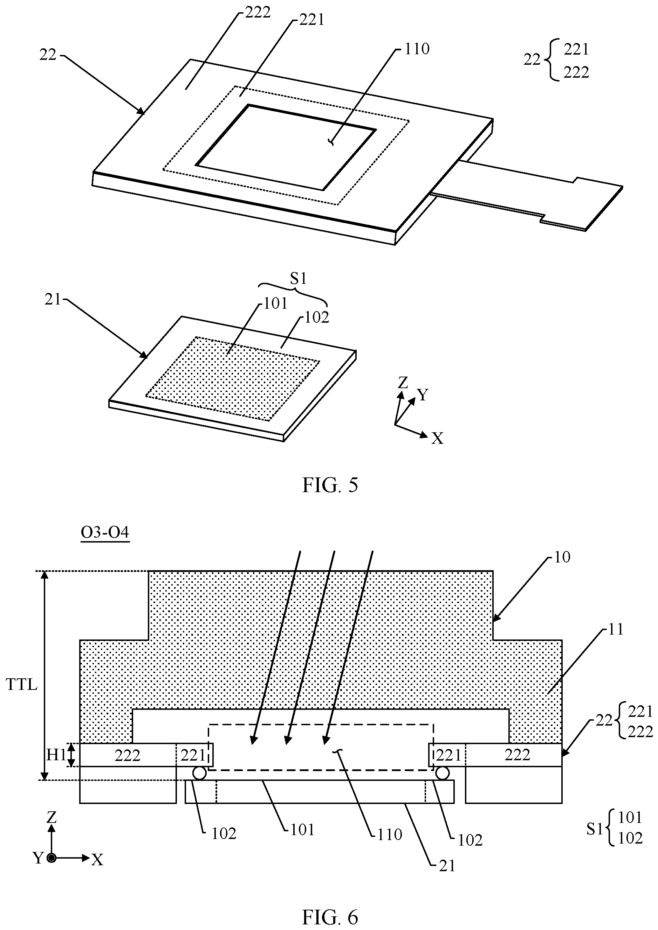

To enable the image sensor 21 to convert the received optical signal into the electrical signal, still as shown in FIG. 4, the image sensor 21 may have a first surface S1. The first surface S1 is a surface that is of the image sensor 21 and that faces the lens assembly 11 in the Z direction, that is, the first surface S1 is a light inlet surface of the image sensor 21. On this basis, as shown in FIG. 5, the first surface S1 may be divided into a photosensitive area 101 and a non-photosensitive area 102 that is around a periphery of the photosensitive area 101. The photosensitive area 101 is an area that is in the image sensor 21 and that can effectively perform photoelectric conversion. Therefore, a photosensitive element that is in the image sensor 21 and that effectively performs photoelectric conversion may be disposed in the photosensitive area 101. In addition, the non-photosensitive area 102 is an area that is in the image sensor 21 and that does not need to perform photoelectric conversion. For example, the non-photosensitive area 102 may be annular and disposed around the periphery of the photosensitive area 101.

On this basis, still as shown in FIG. 5, the circuit board 22 may include a first portion 221 and a second portion 222 that are connected. An electrical signal may be transmitted between the first portion 221 and the second portion 222. Therefore, the first portion 221 being connected to the second portion 222 may mean that the first portion 221 being electrically connected to the second portion 222. The first portion 221 is provided with a first light-transmitting hole 110, and the first light-transmitting hole 110 may expose the photosensitive area 101 of the image sensor 21, so that incident light can enter the photosensitive area 101 through the first light-transmitting hole 110.

For example, a vertical projection of an edge of the first light-transmitting hole 110 onto the first surface S1 of the image sensor 21 may be located on a periphery of the photosensitive area 101, and a specific gap exists between the vertical projection and an edge of the photosensitive area 101. For example, the gap may be about 0.2 mm. In this way, when a manufacturing tolerance of the first light-transmitting hole 110 is satisfied, it can be ensured that the first light-transmitting hole 110 can completely expose the photosensitive area 101, to improve a light receiving rate of the image sensor 21.

In addition, as shown in FIG. 6 (a cross-sectional view obtained by cutting along a dashed line O3-O4 in FIG. 3), the first portion 221 of the circuit board 22 may be disposed on a side on which the first surface S1 of the image sensor 21 is located, and the first portion 221 may fully or partially cover the non-photosensitive area 102 of the image sensor 21. In addition, the first portion 221 may be electrically connected to the image sensor 21, so that the image sensor 21 may be electrically connected to the entire circuit board 22.

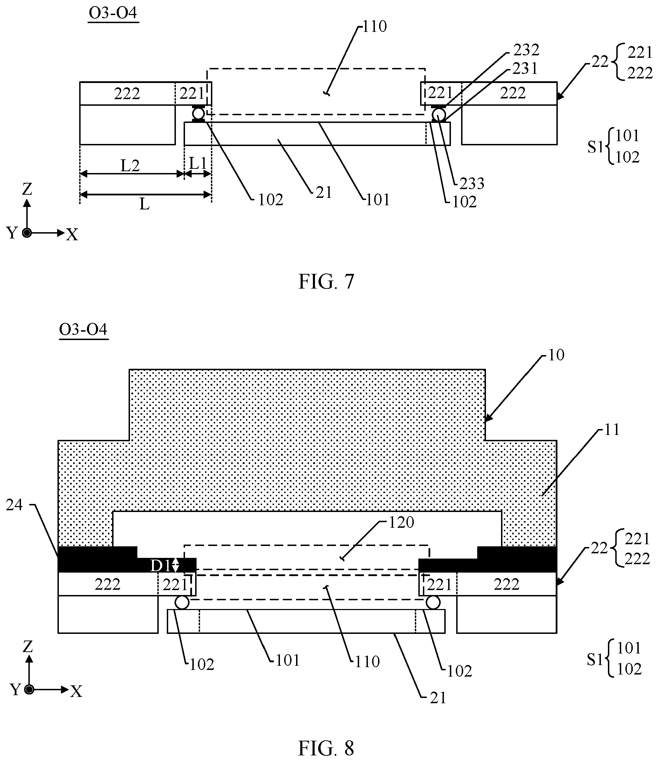

In some embodiments of this application, to enable the first portion 221 of the circuit board 22 to be electrically connected to the image sensor 21, the camera module 10 may further include a first pad (pad) 231, a second pad 232, and an electrical connector 233 shown in FIG. 7 (another cross-sectional view obtained by cutting along the dashed line O3-O4 in FIG. 3). The first pad 231 may be disposed on the first surface S1 of the image sensor 21, and the first pad 231 may be located in the non-photosensitive area 102 of the first surface S1. The first pad 231 may be electrically connected to the image sensor 21. The second pad 232 may be disposed on a surface that is of the first portion 221 of the circuit board 22 and that faces the image sensor 21, and the second pad 232 may be electrically connected to the circuit board 22. For example, the second pad 232 may be electrically connected to a metal trace in the circuit board 22. In addition, the electrical connector 233 is located between the first pad 231 and the second pad 232, one end of the electrical connector 233 is electrically connected to the first pad 231, and the other end of the electrical connector 233 is electrically connected to the second pad 232.

For example, the electrical connector 233 may be a gold ball or a solder ball. In this way, the image sensor 21 may be welded to the circuit board 22 through the first pad (pad) 231, the second pad 232, and the electrical connector 233 by using a flip-chip (flip-chip) process, so that the image sensor 21 may be electrically connected to the circuit board 22 through the electrical connector 233.

In addition, still as shown in FIG. 6, the second portion 222 of the circuit board 22 may be located on a side that is of the first portion 221 and that faces away from the first light-transmitting hole 110, and the second portion 222 may be disposed around a periphery of the first portion 221. In addition, a vertical projection of the second portion 222 of the circuit board 22 onto a plane on which the first surface S1 of the image sensor 21 is located does not overlap the image sensor 21. In other words, the second portion 222 does not cover the image sensor 21. In addition, the lens assembly 11 may be disposed on a side that is of the circuit board 22 and that faces away from the image sensor 21.

In conclusion, still as shown in FIG. 6, in the camera module 10 provided in this embodiment of this application, the lens assembly 11 is disposed on the side that is of the circuit board 22 and that faces away from the image sensor 21, and the first portion 221 of the circuit board 22 is provided with the first light-transmitting hole 110 that exposes the photosensitive area 101. Therefore, after passing through the lens assembly 11, incident light (shown by solid line arrows in FIG. 6) may pass through the first light-transmitting hole 110 and enter the photosensitive area 101 of the image sensor 21. In addition, the first portion 221 of the circuit board 22 is electrically connected to the image sensor 21. Therefore, the image sensor 21 may be electrically connected to the entire circuit board 22 through the first portion 221, so that the image sensor 21 can perform photoelectric conversion on the incident light.

On this basis, as shown in FIG. 7, the first portion 221 of the circuit board 22 is located on the side on which the first surface S1 of the image sensor 21 is located, and the first portion 221 covers the non-photosensitive area 102 of the image sensor 21. Therefore, the first portion 221 may overlap the image sensor 21 in a direction perpendicular to the first surface S1 (namely, the Z direction). In this case, in the X direction, a sum of a length of the first portion 221 and a length of the second portion 222 of the circuit board 22 is a length L, an overlapping portion between the image sensor 21 and the circuit board 22 has a length L1, and there is a length L2 between a left (or right) edge of the image sensor 21 and a left (or right) edge of the circuit board, where L=L1+L2.

Therefore, in the X direction, a partial length of the circuit board 22 is shared with a partial length of the image sensor 21. A shared portion is the length L1 of the overlapping portion between the image sensor 21 and the circuit board 22. Therefore, compared with a solution in which the entire image sensor 21 is disposed in the first light-transmitting hole 110, this can reduce a length of the camera module 10 in the X direction. Based on this, still as shown in FIG. 2, when the length of the camera module 10 in the X direction is reduced, a size that is of the bezel area 202 and that is occupied by the camera module 10 in the X direction may be reduced, reducing a size of the bezel area 202 in the X direction. This helps implement a narrow bezel design of an electronic device 01, and increase a screen-to-body ratio of the electronic device 01.

It can be learned from the foregoing descriptions that, as shown in FIG. 5, the first portion 221 of the circuit board 22 may overlap the image sensor 21 around a periphery of the first light-transmitting hole 110. In this way, in the Y direction, a size (for example, a width) of the overlapping portion between the circuit board 22 and the image sensor 21 is shared, so that a width of the camera module 10 in the Y direction can be reduced, reducing a size of the entire camera module 10 on the XY plane. In this case, layout space of the camera module 10 in the electronic device 10 may be reduced, helping improve space utilization of the electronic device 10 and improve an integration level of the electronic device 10.

In addition, still as shown in FIG. 6, the camera module 10 has a total track length (total track length, TTL), and the TTL is a distance between a light inlet end face (namely, the upper surface) of the lens assembly 11 and the first surface S1 of the image sensor 21. The TTL needs to satisfy specific design requirements.

In related technologies, the PCB may be disposed on a side (that is, below the image sensor 21) that is of the image sensor 21 and that faces away from the lens assembly 11. In this case, a thickness of the camera module (in the Z direction) includes a sum of the TTL and a thickness of the PCB. To be specific, the thickness of the PCB is added to the TTL to be used as a portion of the thickness of the camera module, allowing for a large thickness of the camera module.

To resolve the problem of the large thickness of the camera module, still as shown in FIG. 6, in the camera module 10 provided in this embodiment of this application, at least a portion of the circuit board 22, namely, the first portion 221 of the circuit board 22, is stacked on a side that is of the image sensor 21 and that faces the lens assembly 11. Therefore, the first portion 221 is located between the lens assembly 11 and the image sensor 21, allowing a thickness H1 that is of the first portion 221 of the circuit board 22 and that is in the Z direction to be shared with the TTL. This can reduce the thickness of the camera module 10 in the Z direction. In other words, the thickness of the camera module 10 in the Z direction can reduce the thickness H1 of the circuit board 22 (for example, H1 is about 0.35 mm), helping satisfy ultra-thin design requirements of the entire electronic device.

It can be learned from the foregoing descriptions that, still as shown in FIG. 6, the lens assembly 11 is disposed on the side that is of the circuit board 22 and that faces away from the image sensor 21. For example, when hardness of the circuit board 22 can satisfy a requirement for supporting the lens assembly 11, the lens assembly 11 may be bonded, through a bonding layer, to a surface of the side that is of the circuit board 22 and that faces away from the image sensor 21. In this way, the lens assembly 11 may be supported through the circuit board 22. In this case, the circuit board 22 may be the PCB. Alternatively, the circuit board 22 may be the RFPCB. The PCB and the RFPCB each may include a dielectric layer. In this case, a dielectric layer in a portion that is of the circuit board 22 and that overlaps with the lens assembly 11, that is, a portion that is of the circuit board 22 and that is mainly used to support the lens assembly 11, may be made of a resin material with high hardness.

Alternatively, in some other embodiments of this application, when the circuit board 22 is any one of the PCB, the FPCB, or the RFPCB, to improve support performance of the lens assembly 11, as shown in FIG. 8 (still another cross-sectional view obtained by cutting along the dashed line O3-O4 in FIG. 3), the camera module 10 may further include a first support member 24. The first support member 24 may be disposed between the circuit board 22 and the lens assembly 11, and the first support member 24 may be connected to the circuit board 22 and the lens assembly 11. For example, a bonding layer may be disposed between the first support member 24 and the circuit board 22, and a bonding layer may be disposed between the first support member 24 and the lens assembly 11, so that the first support member 24 may be connected to the circuit board 22 and the lens assembly 11.

In this way, the first support member 24 is disposed between the circuit board 22 and the lens assembly 11, so that a mechanical part formed by connecting the first support member 24 and the circuit board 22 can support the lens assembly 11. This improves support performance for the lens assembly 11, and avoids affecting formation of the circuit board 22 caused by direct pressure exerted by the lens assembly 11 on the circuit board 22. In addition, still as shown in FIG. 8, the first support member 24 is provided with a second light-transmitting hole 120. The second light-transmitting hole 120 may communicate with the first light-transmitting hole 110 provided on the circuit board 22, so that incident light can enter the photosensitive area 101 of the image sensor 21 through the second light-transmitting hole 120 and the first light-transmitting hole 110.

In some embodiments of this application, still as shown in FIG. 8, the first support member 24 may be an injection molded part. For example, a material of the injection molded part may include at least one of epoxy resin or silicon dioxide. In this case, an in-mold injection molding (molding) process may be used to form the first support member 24 on a surface that is of the circuit board 22 and that faces the lens assembly 11. The first support member 24 may be connected to the circuit board 22 as an integrated mechanical part. The integrated mechanical part has high precision, and the first support member 24 is closely combined with the circuit board 22.

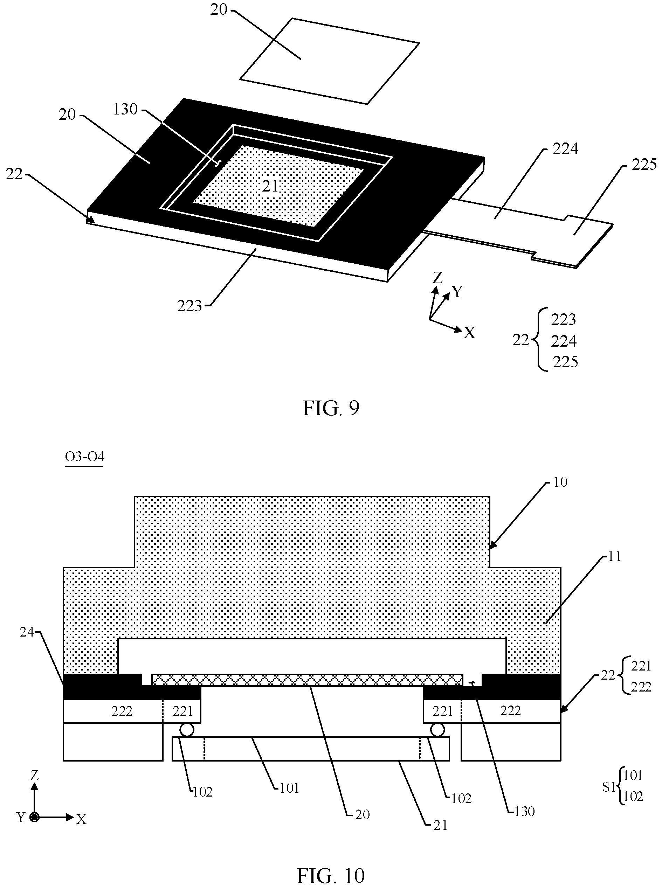

In addition, when the first support member 24 is the injection molded part, still as shown in FIG. 8, the first support member 24 may cover the first portion 221 and the second portion 222 of the circuit board 22. In some embodiments of this application, the first portion 221 and the second portion 222 may form a circuit board body 223 of the circuit board 22 shown in FIG. 9. The circuit board body 223 is configured to carry the lens assembly 11. Therefore, the first support member 24 may completely cover a surface that is of the circuit board body 223 and that faces away from the image sensor 21. It can be learned from the foregoing descriptions that the circuit board body 223 may be any one of the PCB, the FPCB, or the RFPCB.

In this way, the first support member 24 may completely cover a surface that is of the circuit board body 223 and that faces away from the image sensor 21, so that strength of the integrated mechanical part formed by connecting the first support member 24 and the circuit board body 223 can be improved, allowing the integrated mechanical part to support the lens assembly 11 more effectively. On this basis, the integrated mechanical part formed by connecting the first support member 24 and the circuit board body 223 has high strength to support the lens assembly 11, so that the integrated mechanical part formed by connecting the first support member 24 and the circuit board 22 can replace a ceramic substrate, reducing production costs of products.

In addition, as shown in FIG. 8, the first support member 24 covers the first portion 221 of the circuit board 22, so that the first support member 24 can support the first portion 221, improving flatness of a surface that is of the first portion 221 and that faces the image sensor 21, namely, a lower surface of the first portion 221. In this way, when the image sensor 21 is welded to the first portion 221 of the circuit board 22 by using a flip-chip process, a probability that a cold solder joint occurs between the image sensor 21 and the circuit board 22 can be reduced, improving reliability of products.

In addition, still as shown in FIG. 9, in addition to the circuit board body 223, the circuit board 22 may further include a bent part 224 and a connection part 225. The bent part 224 is located between the circuit board body 223 and the connection part 225, and the bent part 224 may be electrically connected to the circuit board body 223 and the connection part 225. For example, the bent part 224 may be an FPCB, and the connection part 225 may be a PCB or an RFPCB. The connection part 225 may be electrically connected to a connector (board-to-board, BTB), so that the entire circuit board 22 may be electrically connected to the mainboard in the electronic device 01 through the connector. The bent part 224 may be bent under an external force, so that the connection part 225 on which the connector is installed can be installed at a preset position on the mainboard.

On this basis, still as shown in FIG. 8, in the first support member 24, a thickness D1 of the first portion 221 that covers the circuit board 22 may satisfy D1≥0.1 mm. The thickness D1 may enable the first support member 24 to effectively support the first portion 221, so that the lower surface of the first portion 221 has good flatness. For example, D1 may be 0.1 mm, 0.15 mm, 0.2 mm, 0.25 mm, 0.3 mm, or the like.

In addition, when the camera module 10 has the filter 20 shown in FIG. 9, a surface that is of the first support member 24 and that faces away from the image sensor 21 may be provided with a first groove 130 for accommodating the filter 20. The second light-transmitting hole 120 shown in FIG. 8 may be disposed on a groove bottom of the first groove 130. In this case, the filter 20 may be disposed in the first groove 130. As shown in FIG. 10 (yet another cross-sectional view obtained by cutting along the dashed line O3-O4 in FIG. 3), the filter 20 may be connected to the bottom of the first groove 130, and the filter 20 may cover the photosensitive area 101 of the image sensor 21. In this way, the first support member 24 may support the filter 20. In addition, the filter 20 is located in the first groove 130 of the first support member 24, a thickness of the first support member 24 may overlap a thickness of the filter 20 in the Z direction, so that the thickness of the entire camera module 10 in the Z direction can be reduced.

The foregoing descriptions are provided by using an example in which the first support member 24 is the injection molded part. In some other embodiments of this application, the first support member 24 may alternatively be a prepared holder (holder). A material of the holder may be at least one of nylon or glass fiber. In this case, a holder having the second light-transmitting hole 120 shown in FIG. 8 may be first formed. The holder may further have a first groove 130 configured to carry the filter 20. Next, the holder is attached, through the bonding layer, to a surface that is of the circuit board 22 and that faces away from the image sensor 21. In this way, the holder does not need to be formed on the circuit board 22 by using the in-mold injection molding process. Instead, the holder may be first prepared by using an injection molding process, and then attached to the circuit board 22, help reduce production costs.

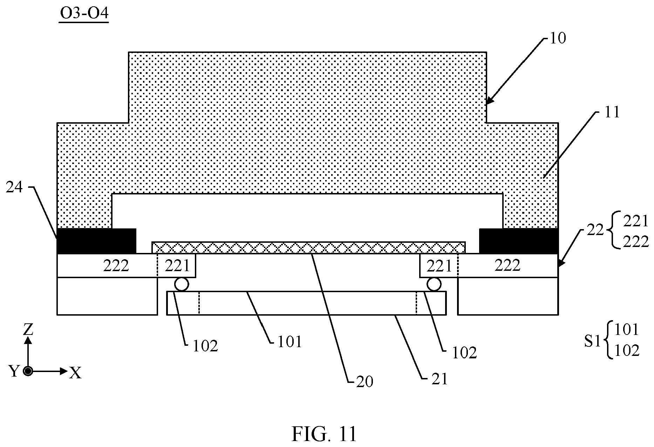

In addition, the foregoing descriptions are provided by using an example in which the first support member 24 shown in FIG. 10 covers the first portion 221 and the second portion 222 of the circuit board 22. In some other embodiments of this application, as shown in FIG. 11 (yet another cross-sectional view obtained by cutting along the dashed line O3-O4 in FIG. 3), the first support member 24 may cover only the second portion 222 of the circuit board 22. In this case, the first support member 24 is located between the lens assembly 11 and the circuit board 22, and a structure formed by connecting the first support member 24 and the second portion 222 of the circuit board 22 may support the lens assembly 11, to improve support performance for the lens assembly 11. In this case, the filter 20 may be disposed on the surface that is of the circuit board 22 and that faces away from the image sensor 21.

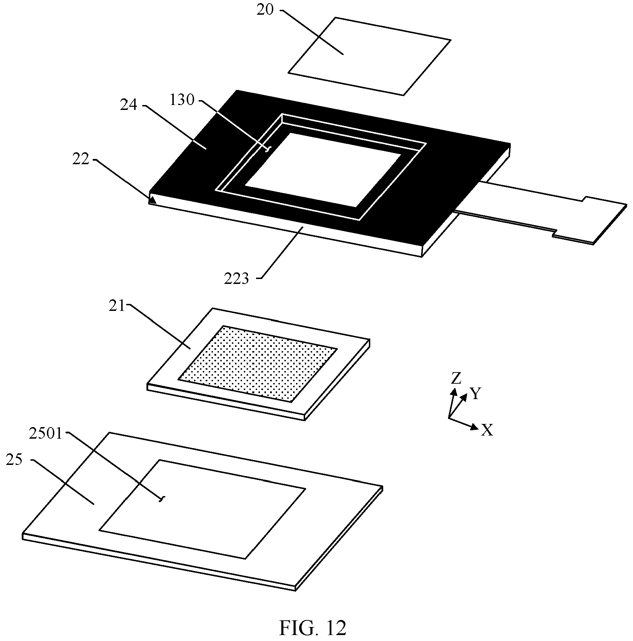

On this basis, to improve rigidity of the entire camera module 10, as shown in FIG. 12, the camera module 10 may further include a second support member 25. The second support member 25 may be disposed on a side that is of the second portion 222 of the circuit board 22 and that faces away from the lens assembly 11. The second support member 25 is provided with an opening 2501, and the opening 2501 is configured to accommodate the image sensor 21.

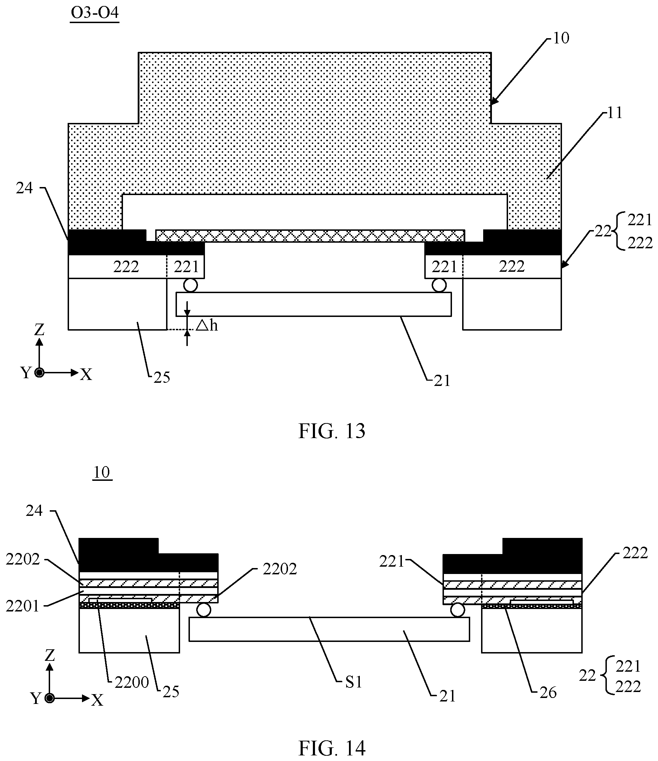

As shown in FIG. 13 (yet another cross-sectional view obtained by cutting along the dashed line O3-O4 in FIG. 3), the second support member 25 may be connected to the second portion 222. For example, the second support member 25 is connected to the second portion 222 through a bonding layer. For example, the second support member 25 may be a metal sheet, such as a steel sheet. Alternatively, the second support member 25 may be a rigid resin sheet. In this way, the second support member 25 connected to the circuit board 22 is disposed, so that a mechanical part formed by connecting the second support member 25, the circuit board 22, and the first support member 24 has strong rigidity, improving rigidity of the entire camera module 10.

In addition, still as shown in FIG. 13, a surface (namely, a lower surface of the second support member 25) that is of the second support member 25 and that faces away from the circuit board 22 may protrude from a surface (namely, a lower surface of the image sensor 21) that is of the image sensor 21 and that faces away from the circuit board 22. For example, there is a height difference △h between the lower surface of the second support member 25 and the lower surface of the image sensor 21. A value of the height difference △h is not limited in this application, as long as the lower surface of the second support member 25 may protrude from the lower surface of the image sensor 21 when a thickness requirement of the camera module 10 in the Z direction is satisfied.

It can be learned from FIG. 13 that the second support member 25 may be disposed around a periphery of the image sensor 21. Therefore, a portion that is of the second support member 25 and that protrudes from the image sensor 21 may protect the image sensor 21. During installation, reliability testing, and use, a probability of collision and friction between the lower surface of the image sensor 21 and another component can be reduced, improving a service life of the image sensor 21 and reliability of the entire camera module 10. The foregoing descriptions are provided by using an example in which the lower surface of the second support member 25 protrudes from the lower surface of the image sensor 21. In some other embodiments of this application, the lower surface of the second support member 25 may be flush with the lower surface of the image sensor 21.

It can be learned from the foregoing descriptions that the second support member 25 may be a metal sheet. Based on this, as shown in FIG. 14, in a direction (namely, the Z direction) perpendicular to the first surface S1 of the image sensor 21, the circuit board 22 may include a dielectric layer 2201 and a metal pattern layer 2202 that are alternately disposed. The metal pattern layer 2202 may be a metal layer that has a preset pattern and that is formed by using a patterning process, for example, a photoetching process. The metal pattern layer 2202 may include a metal trace for transmitting a signal or grounding. In addition, at least one metal pattern layer 2202 in the second portion 222 of the circuit board 22 may include a ground part 2200. The ground part 2200 may be a block-shaped portion in the metal pattern layer 2202, for example, a copper leakage part. The ground part 2200 may be electrically connected through the metal trace for grounding in the metal pattern layer 2202, so that the ground part 2200 can be grounded.

In this case, the ground part 2200 may be electrically connected to the metal sheet (namely, the second support member 25), so that the second support member 25 can be grounded. In this way, the second support member 25 can have anti-electromagnetic interference (electromagnetic interference, EMI) effect, reducing interference caused by an electronic component outside the camera module 10 to the image sensor 21, and improving detection precision of the image sensor 21.

In some embodiments of this application, to enable the ground part 2200 to be electrically connected to the second support member 25, still as shown in FIG. 14, the ground part 2200 may be exposed on a surface that is of the second portion 222 of the circuit board 22 and that faces away from the lens assembly 11. In addition, the camera module 10 may further include a conductive layer 26. The conductive layer 26 may be located between the ground part 2200 and the metal sheet (namely, the second support member 25), and the conductive layer 26 is electrically connected to the ground part 2200 and the metal sheet. For example, the conductive layer 26 may be an anisotropic conductive film (anisotropic conductive film, ACF). In this way, the conductive layer 26 is disposed, so that the ground part 2200 may be electrically connected to the metal sheet, and the conductive layer 26 can improve conductive performance between the ground part 2200 and the metal sheet.

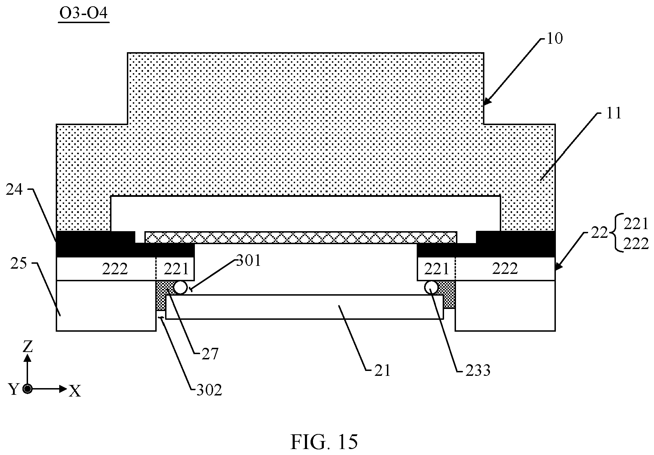

On this basis, to facilitate installation of the image sensor 21, as shown in FIG. 15 (yet another cross-sectional view obtained by cutting along the dashed line O3-O4 in FIG. 3), a first gap 301 may exist between the image sensor 21 and the first portion 221 of the circuit board 22. The electrical connector 233 may be disposed in the first gap 301. In addition, a second gap 302 may exist between the image sensor 21 and the second support member 25. A size of the second gap 302 may satisfy design requirements of a mounting tolerance, facilitating formation of the opening 2501 (as shown in FIG. 12) in the second support member 25 and installation of the image sensor 21 in the opening.

Based on this, to fasten the image sensor 21, the camera module 10 may further include a first bonding layer (underfill) 27. The first bonding layer 27 may fill the second gap 302 and a portion of the first gap 301, and the first bonding layer 27 may be connected to the first portion 221 of the circuit board 22, the image sensor 21, and the second support member 25. In this way, the image sensor 21 may be connected to the circuit board 22 and the second support member 25 through the first bonding layer 27, reducing a probability that the image sensor 21 falls off.

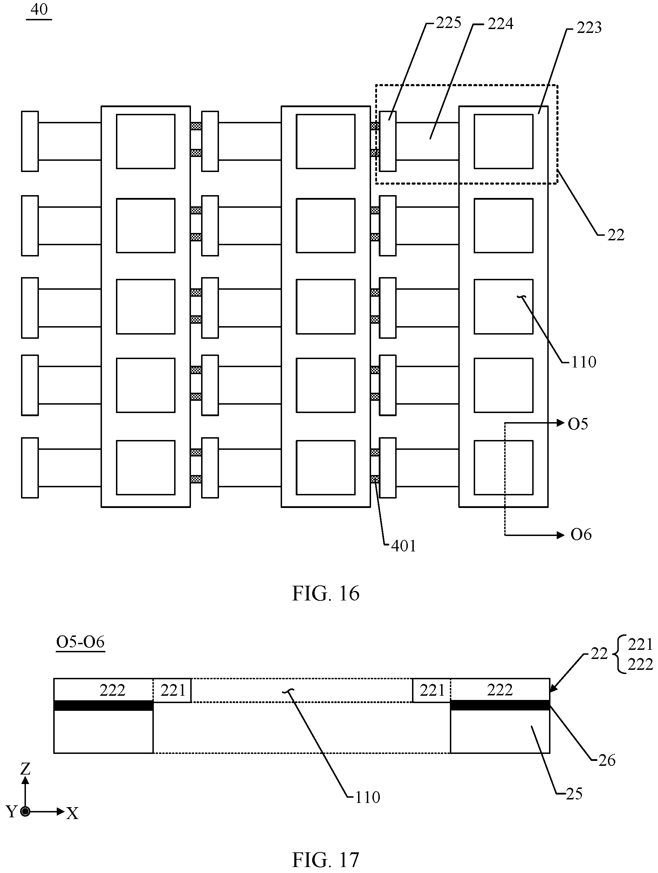

The following describes a manufacturing method of the camera module 10 shown in FIG. 15 by using an example. In some embodiments of this application, as shown in FIG. 16, a circuit board connection board 40 is provided. The circuit board connection board 40 may include a plurality of circuit boards 22, and each circuit board 22 may include the circuit board body 223, the bent part 224, and the connection part 225. The circuit board body 223 includes a first portion 221 and a second portion 222 shown in FIG. 17 (a cross-sectional view obtained by cutting along a dashed line O5-O6 in FIG. 16). Structures and functions of the circuit board body 223, the bent part 224, and the connection part 225 are the same as those described above. Details are not described herein again. The circuit board connection board 40 may further include a plurality of connection ribs 401. The connection rib 401 is located between two adjacent circuit boards 22 in a same row, to connect the two adjacent circuit boards 22.

Next, the circuit board body 223 of each circuit board 22 may be provided with a first light-transmitting hole 110 shown in FIG. 16. It can be learned from the foregoing descriptions that an opening area of the first light-transmitting hole 110 may be greater than a photosensitive area 101 of an image sensor 21 (as shown in FIG. 8), so that the photosensitive area 101 can be completely exposed. Then, as shown in FIG. 17, the second support member 25 is attached to a lower surface of the second portion 222 of the circuit board 22. For example, when the second support member 25 is a metal sheet, the second support member 25 may be electrically connected to a ground part 2200 (as shown in FIG. 14) in the second portion 222 of the circuit board 22 through a conductive layer 26.

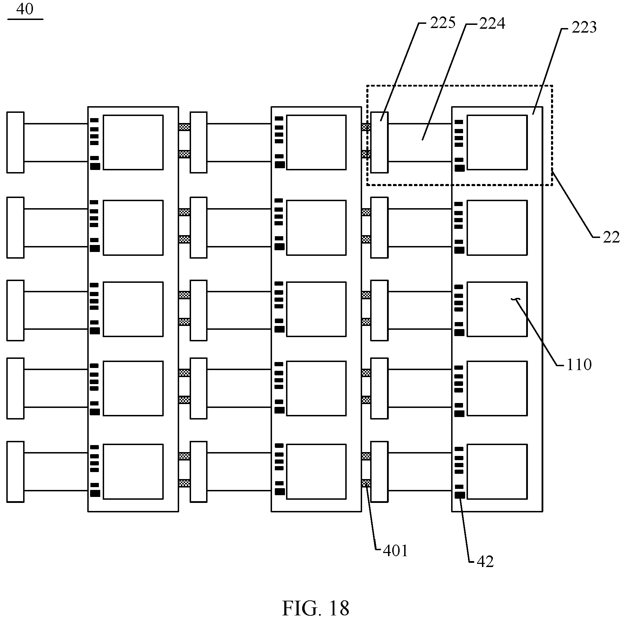

In addition, as shown in FIG. 18, an electronic component 42 is disposed (or referred to as mounted) on the circuit board 22 by using a surface mount technology (surface mount technology, SMT). The electronic component 42 may be a component such as a capacitor or a resistor that is electrically connected to the image sensor 21. For example, the electronic component 42 may be disposed on a side surface that is of the circuit board 22 and that faces away from the second support member 25 (as shown in FIG. 17). In addition, the electronic component 42 may be located on a side that is of the circuit board body 223 and that faces the bent part 224, reducing a length of a metal trace that is in the circuit board 22 and that is used to lead out the electronic component 42.

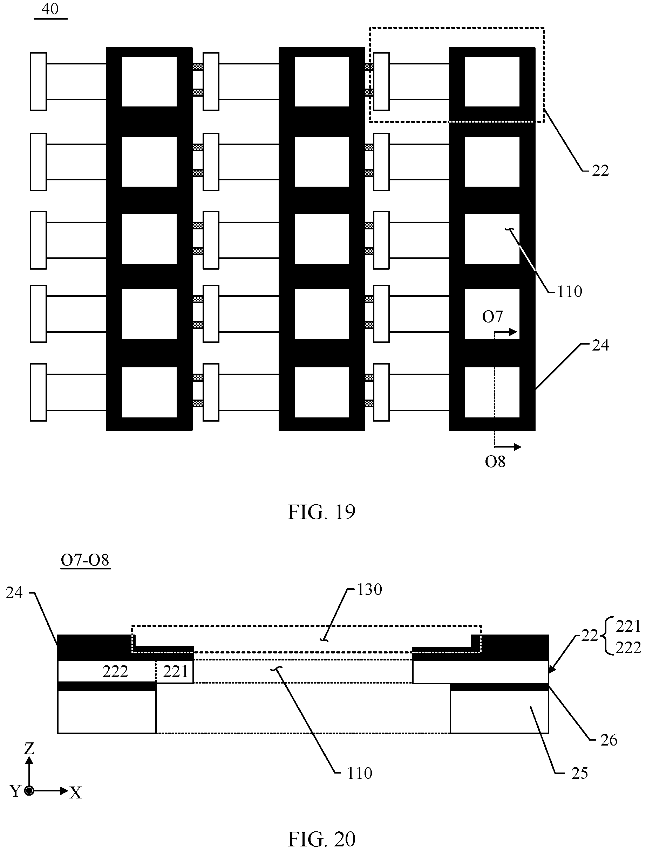

Next, a first support member 24 shown in FIG. 19, which is an integrated structure connected to the circuit board body 223, is formed on an upper surface of the circuit board body 223 by using the foregoing in-mold injection molding (molding) technology. The first support member 24 is an injection molded part. As shown in FIG. 20 (a cross-sectional view obtained by cutting along a dashed line O7-O8 in FIG. 19), the first support member 24 may cover the first portion 221 and the second portion 222 of the circuit board 22. In addition, the first support member 24 is provided with a first groove 130. Alternatively, when the first support member 24 uses a prepared holder (holder), the prepared holder may be attached to an upper surface of the circuit board 22.

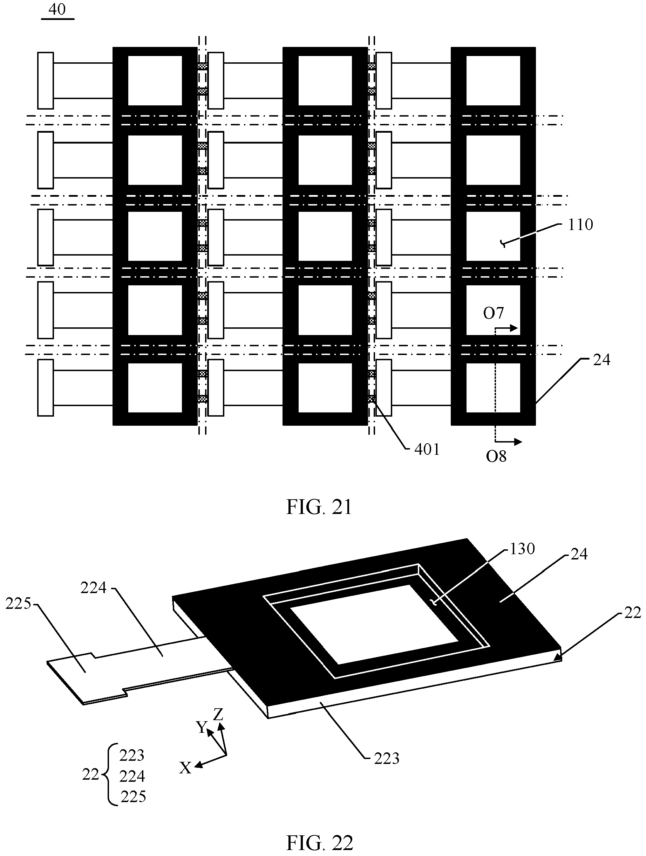

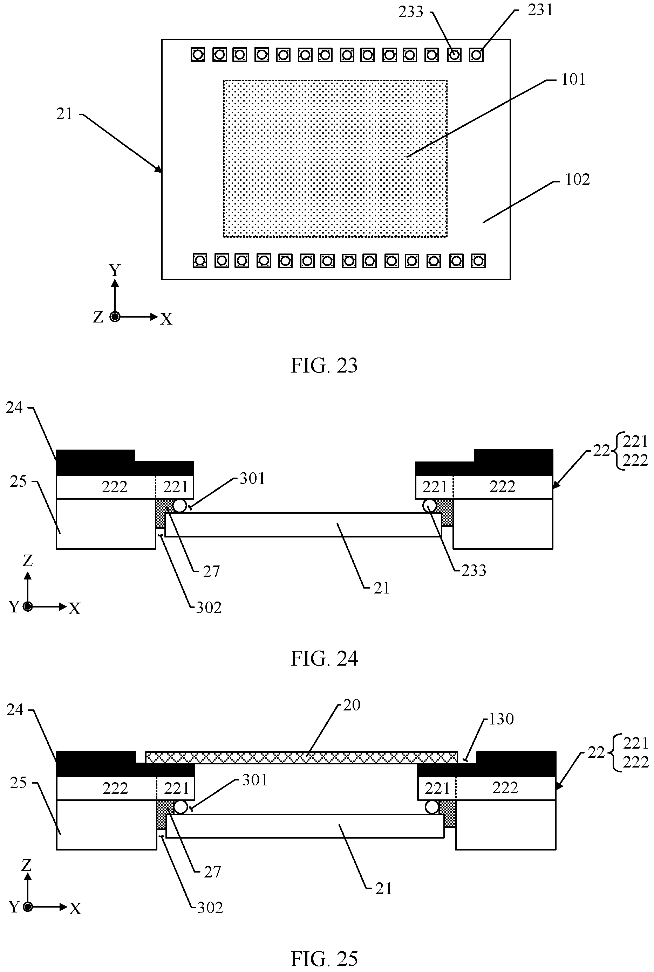

Then, the connection rib 401 in the circuit board connection board 40 is cut (for example, by laser cutting) along a center line shown in FIG. 21 to obtain an independent circuit board 22 shown in FIG. 22. Each circuit board 22 may be disposed in one of the foregoing camera modules 10. Next, as shown in FIG. 23, on a surface (namely, the first surface S1) that is of the image sensor 21 and that has a first pad 231, and in a non-photosensitive area 102, an electrical connector 233 is disposed on one first pad 231 by using a ball placement process.

Next, the image sensor 21 on which the electrical connector 233 is disposed on a lower surface of the circuit board 22 shown in FIG. 24 by using a flip-chip process, so that the image sensor 21 is electrically connected to the first portion 221 of the circuit board 22 through the electrical connector 233. Then, a first bonding layer 27 is filled in a second gap 302 and a portion of a first gap 301, so that the image sensor 21 may be connected to the circuit board 22 and the second support member 25 through the first bonding layer 27.

Next, as shown in FIG. 25, a filter 20 is disposed in the first groove 130 of the first support member 24, so that the filter 20 covers a light inlet surface of the image sensor 21. Then, as shown in FIG. 15, a lens assembly 11 is disposed on a surface that is of the first support member 24 and that faces away from the image sensor 21, and the lens assembly 11 is bonded to the first support member 24 through an adhesive layer, so that the camera module 10 can be prepared.

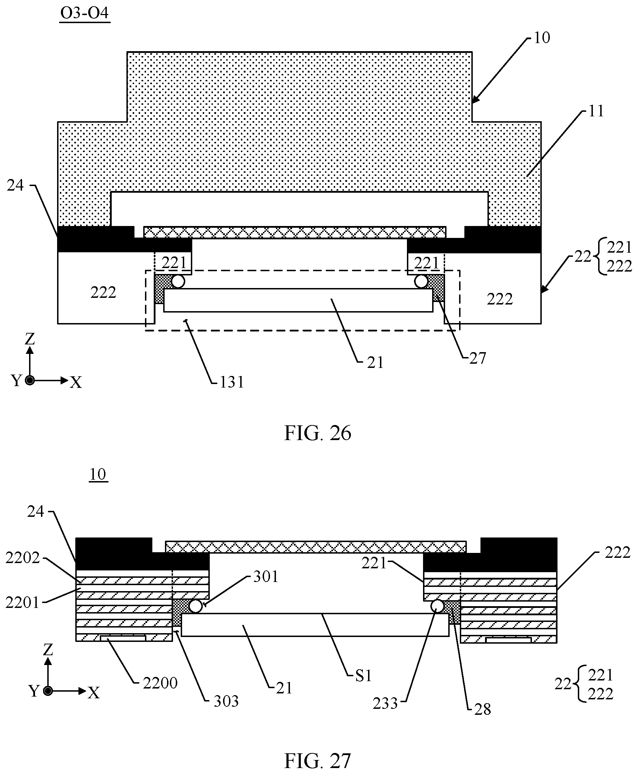

The foregoing descriptions are provided by using an example in which the second support member 25 is disposed on a surface that is of the circuit board and that faces away from the lens assembly 11. In some other embodiments of this application, to improve rigidity of the camera module 10 and protect the image sensor 21, as shown in FIG. 26 (yet another cross-sectional view obtained by cutting along the dashed line O3-O4 in FIG. 3), the second portion 222 of the circuit board 22 may be disposed around a periphery of the image sensor 21. In addition, the second portion 222 and the first portion 221 enclose a second groove 131 configured to accommodate the image sensor.

On this basis, to protect the image sensor 21 and reduce a probability of collision or friction occurring on the image sensor 21, still as shown in FIG. 26, a surface that is of the second portion 222 of the circuit board 22 and that faces away from the lens assembly 11 protrudes from a surface that is of the image sensor 21 and that faces away from the circuit board 22. Technical effects of a protruding portion of the second portion 222 are the same as those described above. Details are not described herein again.

In some embodiments of this application, as shown in FIG. 27, in a direction (namely, a Z direction) perpendicular to the first surface S1 of the image sensor 21, the circuit board 22 may include a dielectric layer 2201 and a metal pattern layer 2202 that are alternately disposed. A quantity of dielectric layers 2201 in the second portion 222 is greater than a quantity of dielectric layers 2201 in the first portion 221, and a quantity of metal pattern layers 2202 in the second portion 222 is greater than a quantity of metal pattern layers 2202 in the first portion 221. In this way, in the Z direction, a thickness of the second portion 222 may be greater than a thickness of the first portion 221, so that rigidity of the circuit board 22 and rigidity of the camera module 10 are improved by increasing a thickness of a portion of the circuit board 22, for example, the thickness of the second portion 222.

In addition, still as shown in FIG. 27, one dielectric layer 2201 in the first portion 221 of the circuit board 22 and one dielectric layer 2201 in the second portion 222 are disposed at a same layer. In addition, one metal pattern layer 2202 in the first portion 221 and one metal pattern layer 2202 in the second portion 222 are disposed at a same layer. In this way, the first portion 221 and the second portion 222 of the circuit board 22 may belong to a same circuit substrate. A portion of the dielectric layer 2201 and the metal pattern layer 2202 in the circuit substrate are cut off by using a cutting process, to form the first portion 221 with a small quantity of film layers, and a portion that is not cut may form the second portion 222 with a large quantity of film layers. In this case, two independent circuit boards do not need to be spliced to form the circuit board 22 having the first portion 221 and the second portion 222, simplifying a manufacturing process of the circuit board 22.

Based on this, to reduce interference caused by an electronic component outside the camera module 10 to the image sensor 21, still as shown in FIG. 27, the metal pattern layer 2202 in the second portion 222 of the circuit board 22 includes a ground part 2200. The ground part 2200 may be exposed on the surface that is of the second portion 222 and that faces away from the lens assembly 11. In this way, when the camera module 10 is a front-facing camera, and the rear housing 05 in FIG. 2 is a metal rear housing, the exposed ground part 2200 may be in contact with or electrically connected to the rear housing 05, to implement grounding of the ground part 2200. Alternatively, when the camera module 10 is a rear-facing camera, and a middle frame of an electronic device is a metal middle frame, the exposed ground part 2200 may be in contact with or electrically connected to the middle frame. Alternatively, the ground part 2200 may be electrically connected to a ground layer of the electronic device 01 through an FPCB.

In addition, still as shown in FIG. 27, it can be learned from the foregoing descriptions that a first gap 301 for accommodating the electrical connector 233 exists between the image sensor 21 and the first portion 221 of the circuit board 22. In addition, a third gap 303 for satisfying a mounting tolerance of the image sensor 21 exists between the image sensor 21 and the second portion 222 of the circuit board 22. Based on this, to fasten the image sensor 21, the camera module 10 may further include a second bonding layer 28. The second bonding layer 28 may fill the third gap 303 and a portion of the first gap 301, and the second bonding layer 28 is connected to the first portion 221 of the circuit board 22, the image sensor 21, and the second portion 222 of the circuit board 22. Technical effects of the second bonding layer 28 and the first bonding layer 27 are the same as those described above. Details are not described herein again.

In addition, a manufacturing method of the camera module 10 shown in FIG. 26 is similar to the manufacturing method of the camera module 10 shown in FIG. 15. Details are not described herein again.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A camera module, comprising:
an image sensor, having a first surface, and the first surface is divided into a photosensitive area and a non-photosensitive area that is around a periphery of the photosensitive area;
a circuit board, comprising:
a first portion, disposed on a side on which the first surface is located and covering the non-photosensitive area, wherein the first portion is provided with a first light-transmitting hole, the first light-transmitting hole exposes the photosensitive area, and the first portion is electrically connected to the image sensor; and
a second portion, located on a side that is of the first portion and that faces away from the first light-transmitting hole, wherein the second portion is disposed around a periphery of the first portion, and is electrically connected to the first portion, and a vertical projection of the second portion onto a plane on which the first surface is located does not overlap the image sensor; and
a lens assembly, disposed on a side that is of the circuit board and that faces away from the image sensor.

2. The camera module according to claim 1, wherein the camera module further comprises:
a first support member, disposed between the circuit board and the lens assembly, wherein the first support member is configured to connect to the circuit board and the lens assembly, the first support member is provided with a second light-transmitting hole, and the second light-transmitting hole communicates with the first light-transmitting hole.

3. The camera module according to claim 2, wherein
a surface that is of the first support member and that faces away from the image sensor is provided with a first groove, and the second light-transmitting hole is provided at a bottom of the first groove; and
the camera module further comprises a filter, the filter is disposed in the first groove, the filter is connected to the bottom of the first groove, and the filter covers the photosensitive area.

4. The camera module according to claim 2 or 3, wherein the first support member is an injection molded part, and the first support member covers the first portion and the second portion.

5. The camera module according to claim 4, wherein a thickness D1 of the first support member that covers the first portion satisfies: D1≥0.1 mm.

6. The camera module according to any one of claims 1 to 5, wherein
the camera module further comprises:
a second support member, disposed on a side that is of the second portion and that faces away from the lens assembly, wherein the second support member is connected to the second portion.

7. The camera module according to claim 6, wherein a surface that is of the second support member and that faces away from the circuit board protrudes from a surface that is of the image sensor and that faces away from the circuit board.

8. The camera module according to claim 6 or 7, wherein the second support member is a metal sheet.

9. The camera module according to claim 8, wherein
in a direction perpendicular to the first surface, the circuit board comprises a dielectric layer and a metal pattern layer that are alternately disposed, and the metal pattern layer in the second portion comprises a ground part; and
the metal sheet is electrically connected to the ground part.

10. The camera module according to claim 9, wherein
the ground part is exposed on a surface that is of the second portion and that faces away from the lens assembly; and
the camera module further comprises a conductive layer, the conductive layer is located between the ground part and the metal sheet, and the conductive layer is electrically connected to the ground part and the metal sheet.

11. The camera module according to any one of claims 6 to 10, wherein
a first gap exists between the image sensor and the first portion;
a second gap exists between the image sensor and the second support member; and
the camera module further comprises a first bonding layer, the first bonding layer fills the second gap and a portion of the first gap, and the first bonding layer is connected to the first portion, the image sensor, and the second support member.

12. The camera module according to any one of claims 1 to 5, wherein
the second portion is disposed around a periphery of the image sensor, and the second portion and the first portion enclose a second groove configured to accommodate the image sensor;
in a direction perpendicular to the first surface, the circuit board comprises a dielectric layer and a metal pattern layer that are alternately disposed;
a quantity of dielectric layers in the second portion is greater than a quantity of dielectric layers in the first portion, and a quantity of metal pattern layers in the second portion is greater than a quantity of metal pattern layers in the first portion; and
one dielectric layer in the first portion and one dielectric layer in the second portion are disposed at a same layer, and one metal pattern layer in the first portion and one metal pattern layer in the second portion are disposed at a same layer.

13. The camera module according to claim 12, wherein a surface that is of the second portion and that faces away from the lens assembly protrudes from a surface that is of the image sensor and that faces away from the circuit board.

14. The camera module according to claim 12 or 13, wherein the metal pattern layer in the second portion comprises a ground part, and the ground part is exposed on the surface that is of the second portion and that faces away from the lens assembly.

15. The camera module according to any one of claims 12 to 14, wherein
a first gap exists between the image sensor and the first portion;
a third gap exists between the image sensor and the second portion; and
the camera module further comprises a second bonding layer, the second bonding layer fills the third gap and a portion of the first gap, and the second bonding layer is connected to the first portion, the image sensor, and the second portion.

16. The camera module according to any one of claims 1 to 15, wherein the camera module further comprises:
a first pad, disposed on the first surface and located in the non-photosensitive area, wherein the first pad is electrically connected to the image sensor;
a second pad, disposed on a surface that is of the first portion and that faces the image sensor, wherein the second pad is electrically connected to the circuit board; and
an electrical connector, located between the first pad and the second pad, wherein one end of the electrical connector is electrically connected to the first pad, and the other end is electrically connected to the second pad.

17. The camera module according to claim 16, wherein the electrical connector comprises a solder ball or a gold ball.

18. An electronic device, comprising:
a housing; and
the camera module according to any one of claims 1 to 17, wherein the camera module is connected to the housing.
